# FASCICULE DE BREVET EUROPEEN

(11) **EP 3 428 007 B1**
(45) Date de publication et mention de la délivrance du brevet: **20.05.2020**
(21) Numéro de dépôt: 18181844.4
(22) Date de dépôt: 05.07.2018
(51) Int. Cl.: B60N 2/30, B60N 2/02, B60N 2/56

(54) **SIEGE DE VEHICULE DOTE D'UN DISPOSITIF DE CHAUFFAGE**
FAHRZEUGSITZ, DER MIT EINER HEIZVORRICHTUNG AUSGESTATTET IST
VEHICLE SEAT WITH HEATING DEVICE

(30) Priorité: 13.07.2017 FR 1756695
(43) Date de publication de la demande: 16.01.2019
(73) Titulaire: RENAULT s.a.s., 92100 Boulogne-Billancourt (FR)
(72) Inventeur: CHHEANG, Nakry, 78470 Saint Rémy les Chevreuses (FR); MARTIN-CALVO, Fernando, 75005 Paris (FR)

(56) Documents cités:
- DE-A1-102009 039 139
- DE-A1-102012 018 261
- DE-U1-202014 103 928
- FR-A1- 2 816 261
- US-A- 5 752 845
- US-A1- 2010 052 390

## Description

L'invention se rapporte à un siège de véhicule doté d'un dispositif de chauffage.

Il sera supposé pour la suite de la description qu'un siège de véhicule comprend conventionnellement une assise et un dossier.

Généralement, dans la plupart des véhicules, des sièges sont aptes à être escamotés, pour agrandir le volume disponible destiné à être chargé avec des marchandises et/ou objets à transporter. Cet escamotage consiste le plus souvent en un rabattement extrême du dossier sur l'assise, de sorte qu'au final, ladite assise et ledit siège se retrouvent au contact l'un de l'autre dans une position horizontale, conférant au siège replié une géométrie compacte. Pour ce type de siège, l'assise et le dossier restent liés de la même manière entre la position fonctionnelle du siège et sa position escamotée. Or, bien que le gain de place obtenu dans le véhicule avec de tels sièges soit appréciable, il n'est en revanche pas optimisé. Donc, afin d'accroitre un peu plus le volume disponible au sein du véhicule dans le but de charger davantage encore d'objets et/ou de marchandises, de nouveaux types de sièges ont été conçus sur la base d'une séparation physique de l'assise et du dossier. En effet, pour passer d'une configuration fonctionnelle à une configuration escamotée, l'assise de ces nouveaux sièges est d'abord translatée vers l'avant selon une direction sensiblement horizontale, avant de faire pivoter vers l'avant le dossier afin qu'il puisse venir occuper l'emplacement initial de ladite assise. De cette manière, d'un point de vue gain de place dans le véhicule, ces nouveaux sièges sont performants, car ils demeurent à une faible altitude au-dessus d'un plancher du véhicule et se retrouvent dans une position très avancée dans ledit véhicule.

Parallèlement à la recherche d'un gain de place optimisé au sein du véhicule, il est également souhaitable d'améliorer le confort des passagers, notamment en proposant un dispositif de chauffage de l'assise et du dossier des sièges présents dans le véhicule. Des exemples de tels dispositifs sont décrits dans US2010/052390 et FR2816261. Si pour des sièges dont le dossier et l'assise demeurent liés entre eux, entre la position fonctionnelle et la position escamotée évoquées ci-avant, le dispositif de chauffage demeure inchangé, en revanche, il n'en est pas de même pour les sièges dont l'assise et le dossier sont amenés à se séparer entre les deux positions précédentes. En effet, dans ce dernier cas, il faudrait prévoir un circuit électrique d'alimentation du dispositif de chauffage, mettant en œuvre de longs fils électriques pour pouvoir notamment accompagner la translation de l'assise. Or, la présence de fils électriques de grande longueur et trainant sur le plancher d'un véhicule n'est absolument pas satisfaisante d'un point de vue sécurité, car lesdits fils pourraient facilement être arrachés par les occupants du véhicule et ainsi créer un court-circuit, ou pourraient constituer une cause de chute pour un occupant se prenant les pieds dans lesdits fils.

Par définition, la position fonctionnelle du siège se traduit par une assise s'étendant selon un plan sensiblement horizontal et par un dossier en position légèrement inclinée vers l'arrière par rapport à un plan vertical. Cette position fonctionnelle permet à un individu d'être assis confortablement dans le véhicule.

Un siège de véhicule selon l'invention peut s'escamoter de façon optimisée dans un véhicule automobile, de manière à accroitre l'espace disponible dans ledit véhicule, tout en disposant d'un dispositif de chauffage sécuritaire, adapté à la position escamotée dudit siège.

L'invention a pour objet un siège de véhicule comprenant une assise, un dossier et un dispositif de chauffage de ladite assise et dudit dossier, ledit siège étant apte à passer d'une position fonctionnelle à une position escamotée au moyen d'une séparation de l'assise et du dossier.

La principale caractéristique d'un siège selon l'invention est que le dispositif de chauffage comprend un premier élément de connexion électrique solidarisé au dossier et un deuxième élément de connexion électrique solidarisé à l'assise, lesdits deux éléments coopérant ensemble lorsque le siège est dans la position fonctionnelle, et étant aptes à être séparés pour permettre audit siège de se retrouver dans la position escamotée. Autrement dit, le circuit électrique apte à chauffer le dossier et l'assise du siège, et qui est préférentiellement alimenté en courant électrique par une source électrique déjà présente dans le véhicule, comprend une connexion électrique entre un élément de connexion du dossier et un élément de connexion de l'assise. De cette manière, l'assise peut être séparée du dossier pour permettre au siège de se retrouver dans la position escamotée, au moyen d'une simple déconnexion entre le premier élément de connexion et le deuxième élément de connexion. Une fois séparée du dossier, l'assise peut alors être librement translatée loin du dossier. En effet, ces deux éléments de connexion fonctionnent préférentiellement sur le principe d'une prise électrique, dont la fiche peut facilement se connecter ou se déconnecter d'un socle. Une fois que la déconnexion entre le premier élément de connexion et le deuxième élément de connexion s'est produite, plus rien ne retient l'assise au siège.

Avantageusement, le premier élément de connexion et le deuxième élément de connexion coopèrent au moyen d'une interaction de type mâle/femelle. Il s'agit d'une interaction réversible bien maitrisée, permettant facilement de déconnecter et de reconnecter électriquement le premier et le deuxième élément de connexion du siège selon l'invention.

De façon préférentielle, le premier élément de connexion comprend au moins un compartiment apte à conduire le courant électrique, le deuxième élément de connexion comprenant au moins un plot saillant apte à conduire le courant électrique et destiné à venir se loger dans ledit compartiment en étant au contact de celui-ci. A titre d'exemple, le premier élément peut comprendre quatre compartiments alignés et le deuxième élément peut comprendre quatre plots saillants alignés et destinés à venir chacun se loger dans l'un desdits compartiments. Chaque plot possède une forme simple, telle que par exemple une forme cylindrique ou parallélépipédique.

Préférentiellement, chaque compartiment comprend une lamelle déformable élastiquement et apte à conduire le courant électrique, chaque plot pénétrant dans un compartiment en déformant ladite lamelle par contact. Chaque lamelle déformable tapisse au moins partiellement chaque compartiment et permet d'établir un contact électrique avec chaque plot. En se déformant, la lamelle permet également de retenir mécaniquement chaque plot dans le compartiment en exerçant une pression sur ledit plot.

De façon avantageuse, un siège selon l'invention comprend un connecteur électrique principal solidaire du dossier et apte à être branché sur un circuit électrique du véhicule, ledit connecteur principale étant en liaison électrique avec le premier élément de connexion. De cette manière, puisque le dossier ne fait que pivoter vers l'avant entre la position fonctionnelle et la position escamotée, le connecteur principal va effectuer une course limitée. Si ledit connecteur était solidarisé à l'assise il faudrait prévoir une longueur de câble importante reliant ledit connecteur principal au circuit électrique du véhicule, afin de pouvoir accompagner le mouvement de translation de l'assise.

Avantageusement, le connecteur électrique principal est en liaison électrique avec un premier connecteur solidaire du dossier et apte à être branché à une nappe chauffante dudit dossier. Le connecteur principal permet d'acheminer le courant électrique vers une nappe chauffante via le premier connecteur.

De façon préférentielle, la liaison électrique entre le connecteur électrique principal et le premier connecteur est réalisée au moyen d'au moins un fil électrique. Le nombre de fils électriques dépend du nombre de fonctions que l'on souhaite voir exercer par le premier connecteur.

Préférentiellement, la liaison électrique entre le connecteur électrique principal et le premier élément de connexion est réalisée au moyen d'au moins un fil électrique. Le nombre de fils électriques dépend du nombre de fonctions que l'on souhaite voir exercer par le premier élément de connexion coopérant avec le deuxième élément de connexion.

De façon avantageuse, le deuxième élément de connexion est en liaison électrique avec un deuxième connecteur solidaire de l'assise et apte à être branché à une nappe chauffante de ladite assise.

Avantageusement, la liaison électrique entre le deuxième élément de connexion et le deuxième connecteur est réalisée au moyen d'au moins un fil électrique. Le nombre de fils électriques dépend du nombre de fonctions que l'on souhaite voir exercer par le premier connecteur.

Un siège selon l'invention présente l'avantage de pouvoir s'escamoter de façon optimisée dans un véhicule automobile, tout en possédant un dispositif de chauffage parfaitement adapté aux différentes positions du siège, sans présenter le moindre danger pour les occupants du véhicule. Il a de plus l'avantage de posséder un dispositif de chauffage simple, impliquant des pièces (connecteurs et fils électriques) usuelles, faciles à monter et peu coûteuses, mais dont l'agencement est judicieux pour permettre un passage fluide du siège, d'une position fonctionnelle vers une position escamotée.

On donne ci-après une description détaillée d'un mode de réalisation préféré d'un siège de véhicule selon l'invention en se référant aux figures suivantes :
- La figure 1A est une vue en perspective d'un siège selon l'invention dans une position fonctionnelle,
- La figure 1B est une vue en coupe simplifiée d'un siège selon l'invention dans une position escamotée,
- La Figure 2 est une vue en perspective de la structure d'un siège selon l'invention, montrant une zone de connexion d'un dispositif de chauffage entre l'assise et le dossier,
- La figure 3 est une vue en perspective d'un deuxième élément de connexion d'un dispositif de chauffage d'un siège selon l'invention,
- La figure 4 est une vue en perspective d'un premier élément de connexion d'un dispositif de chauffage d'un siège selon l'invention,
- Les figures 5A et 5B sont des vues en perspective sous un angle différent de la coopération d'un premier élément de connexion et d'un deuxième élément de connexion d'un dispositif de chauffage d'un siège selon l'invention,
- La figure 6 est une vue en coupe agrandie et partielle d'un siège selon l'invention, montrant la zone de connexion entre le premier élément de connexion et le deuxième élément de connexion,
- La figure 7 est une vue du dessus de la zone de connexion de la figure 6.

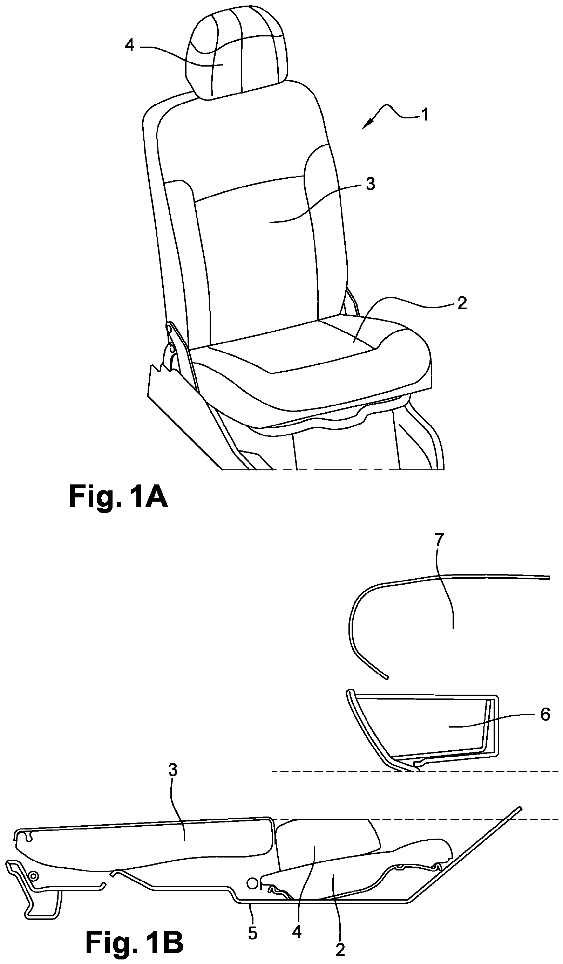

En se référant à la figure 1A, un siège 1 de véhicule selon l'invention comprend classiquement une assise 2 et un dossier 3 comportant généralement un appui-tête 4. Dans une position fonctionnelle, l'assise 2 s'étend dans un plan sensiblement horizontal, et le dossier 3 se retrouve légèrement incliné vers l'arrière, par rapport à un plan vertical. De cette manière, dans une telle position, le siège 1 permet à un individu de s'asseoir confortablement dans un véhicule, soit en tant que passager, soit en tant que conducteur.

En se référant à la figure 1B, un tel siège 1 présente la particularité de s'escamoter, pour libérer de la place dans le véhicule et permettre le chargement d'objets allongés et/ou volumineux. Ainsi, depuis la position fonctionnelle illustrée à la figure 1, pour obtenir cette position escamotée, l'assise 2 est tirée vers l'avant afin de subir un mouvement de translation le long d'un plan sensiblement horizontal. La longueur de la course de l'assise 2 durant cette translation, est comprise entre 60% et 100% de la longueur totale de ladite assise 2. Autrement dit, l'assise 2 s'éloigne du dossier 3 pour se retrouver dans une position très avancée par rapport à son emplacement initial. Le dossier 3 est ensuite rabattu vers l'avant au moyen d'une rotation, dont l'amplitude angulaire est supérieure à 90°, l'appui-tête 4 venant se superposer à l'assise 2 avancée. On obtient au final un siège 1 étalé selon un axe longitudinal du véhicule, ayant une très faible altitude par rapport à un plancher 5 du véhicule 1, et occupant une position très avancée dans ledit véhicule. Si le siège 1 était un siège avant du véhicule, il parviendrait, dans une position escamotée, à se glisser sous une boite 6 à gants d'une planche de bord 7 du véhicule. Dans une telle configuration escamotée, le siège 1 libère un espace important dans le véhicule, qui pourra être mis à profit pour charger des objets volumineux et/ou allongés.

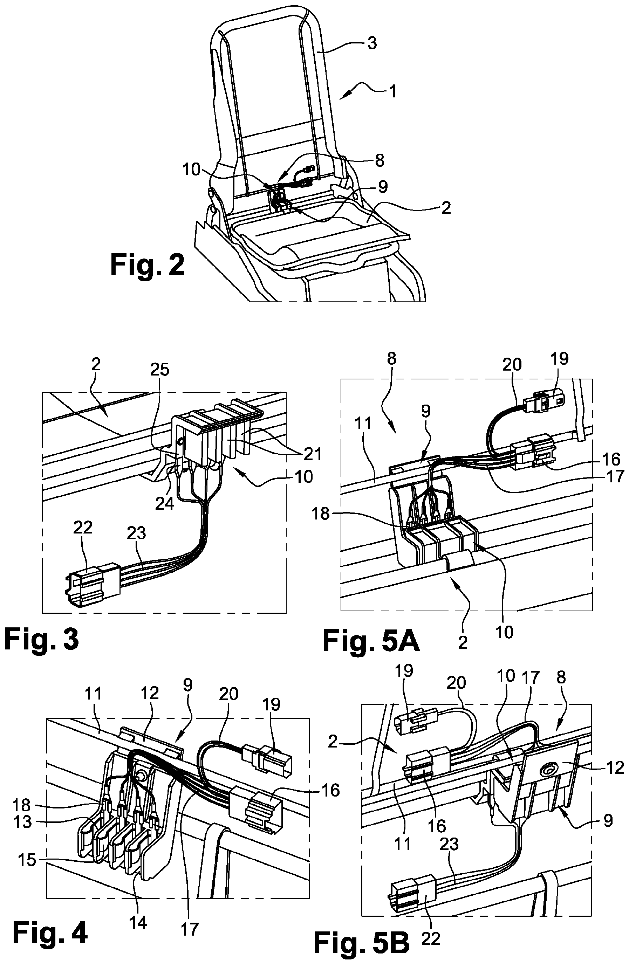

En se référant à la figure 2, un siège 1 selon l'invention est doté d'un dispositif de chauffage apte à chauffer son assise 2 et son dossier 3. Un tel dispositif de chauffage met en œuvre une zone de connexion 8 électrique entre l'assise 2 et le dossier 3, ladite zone 8 impliquant un premier élément 9 de connexion électrique solidaire du dossier 3, et un deuxième élément 10 de connexion électrique solidaire de l'assise 2, lesdits deux éléments 9, 10 étant aptes à coopérer pour assurer une connexion électrique entre le dossier 3 et l'assise 2. De cette manière, pour escamoter le siège 1 suivant les modalités précédemment décrites, il suffit de séparer le premier élément 9 de connexion et le deuxième élément 10 de connexion, avant de pouvoir translater l'assise 2 loin du dossier 3.

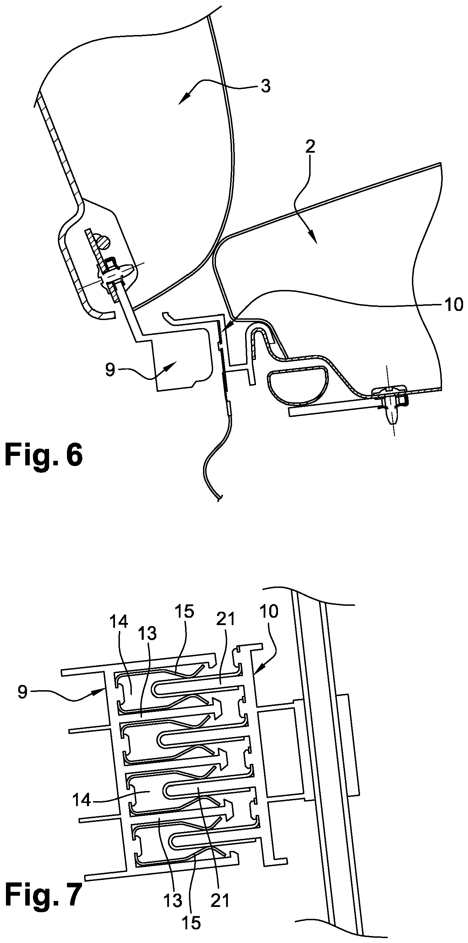

En se référant aux figures 4 et 7, le premier élément de connexion 9 est solidaire d'une barre 11 transversale de la structure du dossier 3, par l'intermédiaire d'un support 12 qui est soudé à ladite barre 11. Cette barre 11 est sensiblement horizontale et s'étend selon une direction transversale du véhicule. Ce premier élément de connexion 9 présente schématiquement cinq parois parallèles 13, définissant quatre compartiments 14, alignés selon une direction transversale du véhicule. Une lamelle 15 conductrice de courant, présentant un étranglement délimité par deux parois de ladite lamelle 15, est insérée dans chaque compartiment 14 de façon à venir au contact des faces délimitant ledit compartiment 14. Chaque lamelle 15 est déformable élastiquement, de sorte que les deux parois délimitant l'étranglement puissent s'écarter l'une de l'autre lors de l'insertion d'un objet entre elles. Lorsque ledit objet est retiré, les deux parois retrouvent naturellement leurs positions initiales.

En se référant aux figures 4, 5A et 7, le dispositif de chauffage présente un connecteur électrique principal 16 solidaire de la structure du dossier 3, et apte à être branché sur un circuit électrique du véhicule de façon à alimenter en courant électrique ledit dispositif de chauffage. Ce connecteur électrique principal 16 est en liaison électrique avec le premier élément 9 de connexion électrique, par l'intermédiaire de quatre fils 17 électriques, dont une extrémité de chacun desdits fils 17 se termine par une cosse 18 destinée à venir s'enficher dans la lamelle 15 tapissant le fond d'un compartiment 14 dudit premier élément 9. Il y a autant de fils électriques 17 qu'il y a de compartiments 14. Ce connecteur électrique principal 16 est également en liaison électrique avec un premier connecteur électrique 19 solidaire de la structure du dossier 3, ladite liaison s'effectuant par l'intermédiaire de deux fils électriques 20. Ce premier connecteur électrique 19 est apte à être branché à une nappe chauffante dudit dossier 3, ladite nappe comportant une résistance électrique filaire.

En se référant aux figures 3 et 6, le deuxième élément de connexion 10 est solidaire de la structure de l'assise 2, et présente quatre plots 21 de forme sensiblement parallélépipédique. Ces plots 21 sont parallèles et alignés selon une direction transversale du véhicule. Ils sont destinés à venir s'insérer dans les compartiments 14 du premier élément de connexion 9 en déformant les lamelles 15, essentiellement au niveau de leur étranglement. En effet, l'introduction d'un plot 21 dans la lamelle 15 d'un compartiment 14, va entrainer un écartement des deux parois délimitant l'étranglement de ladite lamelle 15. Ce deuxième élément de connexion 10 est en liaison électrique avec un deuxième connecteur électrique 22 fixé à une structure de l'assise 2, ledit deuxième connecteur 22 étant apte à être branché à une nappe chauffante de l'assise 2, dont le principe de fonctionnement est analogue à celui de la nappe chauffante du dossier 3. La liaison électrique entre le deuxième élément 10 de connexion et le deuxième connecteur 22 est réalisée par l'intermédiaire de quatre fils 23 électriques, dont une extrémité de chacun desdits fils 23 se termine par une cosse 24 destinée à venir s'enficher dans une lamelle 25 conductrice, solidarisée à chaque plot 21 du deuxième élément de connexion 10. Autrement dit, chaque plot 21 est prolongé par une lamelle 25 conductrice de courant, et qui est fixée au deuxième élément de connexion 10 électrique.

En se référant aux figures 5A, 5B, 6 et 7, lorsque le siège 1 est dans une position fonctionnelle, il existe une coopération étroite entre le premier élément 9 de connexion et le deuxième élément 10 de connexion, se traduisant par une insertion des plots 21 dans chaque compartiment 14 du premier élément de connexion 9, s'accompagnant d'une déformation des lamelles 15 présentes dans lesdits compartiments 14. Cette déformation permet d'assurer un contact étroit entre chaque plot 21 et la lamelle 15 correspondante, pour assurer un bon contact électrique entre ces deux éléments 15, 21, et pour assurer une liaison mécanique robuste entre eux. De cette manière, le courant électrique en provenance du connecteur principal 16 est acheminé vers le premier et le deuxième connecteur 19, 22. Si un capteur inséré dans le siège 1 détecte la présence d'un individu assis sur ledit siège 1, les nappes chauffantes du dossier 3 et de l'assise 2 peuvent alors être activées.

Si un utilisateur décide d'agrandir le volume disponible dans le véhicule afin de procéder au chargement d'objets allongés et/ou volumineux, il va escamoter le siège 1 selon les modalités décrites ci-avant. Pour ce faire, il va commencer par séparer le premier élément de connexion 9 et le deuxième élément de connexion 10 du dispositif de chauffage, avant de procéder ensuite à une translation de l'assise 2 vers l'avant. La désolidarisation desdits deux éléments de connexion 9, 10 entraine immédiatement la désactivation du dispositif de chauffage.

Si cet utilisateur souhaite remettre le siège 1 dans une configuration fonctionnelle, il rapproche l'assise 2 du dossier 3, puis se livre à la connexion électrique entre le premier élément de connexion 9 et le deuxième élément de connexion 10.

## Revendications

1. Siège (1) de véhicule comprenant une assise (2), un dossier (3) et un dispositif de chauffage de ladite assise (2) et dudit dossier (3), ledit siège (1) étant apte à passer d'une position fonctionnelle à une position escamotée au moyen d'une séparation de l'assise (2) et du dossier (3), **caractérisé en ce que** le dispositif de chauffage comprend un premier élément (9) de connexion électrique solidarisé au dossier (3) et un deuxième élément (10) de connexion électrique solidarisé à l'assise (2), et **en ce que** lesdits deux éléments (9, 10) coopèrent ensemble lorsque le siège (1) est dans la position fonctionnelle, et sont aptes à être séparés pour permettre audit siège (1) de se retrouver dans la position escamotée.

2. Siège de véhicule selon la revendication 1 **caractérisé en ce que** le premier élément de connexion (9) et le deuxième élément de connexion (10) coopèrent au moyen d'une interaction de type mâle/femelle.

3. Siège de véhicule selon l'une quelconque des revendications 1 ou 2, **caractérisé en ce que** le premier élément de connexion (9) comprend au moins un compartiment (14) apte à conduire le courant électrique, et **en ce que** le deuxième élément de connexion (10) comprend au moins un plot (21) saillant apte à conduire le courant électrique et destiné à venir se loger dans ledit compartiment (14) en étant au contact de celui-ci.

4. Siège de véhicule selon la revendication 3, **caractérisé en ce que** chaque compartiment (14) comprend une lamelle déformable (15) élastiquement et apte à conduire le courant électrique, et **en ce que** chaque plot (21) pénètre dans un compartiment (14) en déformant ladite lamelle (15) par contact.

5. Siège de véhicule selon l'une quelconque des revendications 1 à 4, **caractérisé en ce qu'**il comprend un connecteur électrique principal (16) solidaire du dossier (3) et apte à être branché sur un circuit électrique du véhicule, et **en ce que** ledit connecteur principal (16) est en liaison électrique avec le premier élément de connexion (9).

6. Siège de véhicule selon la revendication 5 **caractérisé en ce que** le connecteur électrique principal (16) est en liaison électrique avec un premier connecteur (19) solidaire du dossier (3) et apte à être branché à une nappe chauffante dudit dossier (3).

7. Siège de véhicule selon la revendication 6, **caractérisé en ce que** la liaison électrique entre le connecteur électrique principal (16) et le premier connecteur (19) est réalisée au moyen d'au moins un fil électrique (17).

8. Siège de véhicule selon l'une quelconque des revendications 5 à 7, **caractérisé en ce que** la liaison électrique entre le connecteur électrique principal (16) et le premier élément de connexion (9) est réalisée au moyen d'au moins un fil (20).

9. Siège de véhicule selon l'une quelconque des revendications 1 à 8, **caractérisé en ce que** le deuxième élément de connexion (10) est en liaison électrique avec un deuxième connecteur (22) solidaire de l'assise (2) et apte à être branché à une nappe chauffante de ladite assise (2).

10. Siège de véhicule selon la revendication 9, **caractérisé en ce que** la liaison électrique entre le deuxième élément de connexion (10) et le deuxième connecteur (22) est réalisée au moyen d'au moins un fil électrique (23).

## Patentansprüche

1. Fahrzeugsitz (1), welcher ein Sitzteil (2), eine Rückenlehne (3) und eine Heizvorrichtung für das Sitzteil (2) und die Rückenlehne (3) umfasst, wobei der Sitz (1) dafür ausgelegt ist, mittels einer Trennung des Sitzteils (2) und der Rückenlehne (3) aus einer funktionalen Position in eine eingeklappte Position zu wechseln, **dadurch gekennzeichnet, dass** die Heizvorrichtung ein erstes elektrisches Verbindungselement (9), das mit der Rückenlehne (3) fest verbunden ist, und ein zweites elektrisches Verbindungselement (10), das mit dem Sitzteil (2) fest verbunden ist, umfasst, und dadurch, dass die beiden Elemente (9, 10) zusammenwirken, wenn sich der Sitz (1) in der funktionalen Position befindet, und getrennt werden können, um zu ermöglichen, dass sich der Sitz (1) in der eingeklappten Position befindet.

2. Fahrzeugsitz nach Anspruch 1, **dadurch gekennzeichnet, dass** das erste Verbindungselement (9) und das zweite Verbindungselement (10) mittels einer Interaktion vom Typ Stecker/Buchse zusammenwirken.

3. Fahrzeugsitz nach einem der Ansprüche 1 oder 2, **dadurch gekennzeichnet, dass** das erste Verbindungselement (9) wenigstens ein Abteil (14) aufweist, das in der Lage ist, den elektrischen Strom zu leiten, und dadurch, dass das zweite Verbindungselement (10) wenigstens ein vorstehendes Kontaktstück (21) umfasst, das in der Lage ist, den elektrischen Strom zu leiten, und dazu bestimmt ist, in dem Abteil (14) aufgenommen zu werden und sich dabei in Kontakt mit diesem zu befinden.

4. Fahrzeugsitz nach Anspruch 3, **dadurch gekennzeichnet, dass** jedes Abteil (14) eine Lamelle (15) umfasst, die elastisch verformbar ist und in der Lage ist, den elektrischen Strom zu leiten, und dadurch, dass jedes Kontaktstück (21) in ein Abteil (14) eindringt und dabei die Lamelle (15) durch Kontakt verformt.

5. Fahrzeugsitz nach einem der Ansprüche 1 bis 4, **dadurch gekennzeichnet, dass** er einen elektrischen Hauptsteckverbinder (16) umfasst, der mit der Rückenlehne (3) fest verbunden ist und an einen Stromkreis des Fahrzeugs anschließbar ist, und dadurch, dass der Hauptsteckverbinder (16) mit dem ersten Verbindungselement (9) in elektrischer Verbindung steht.

6. Fahrzeugsitz nach Anspruch 5, **dadurch gekennzeichnet, dass** der Hauptsteckverbinder (16) mit einem ersten Verbinder (19) in elektrischer Verbindung steht, der mit der Rückenlehne (3) fest verbunden ist und an eine Heizeinlage der Rückenlehne (3) anschließbar ist.

7. Fahrzeugsitz nach Anspruch 6, **dadurch gekennzeichnet, dass** die elektrische Verbindung zwischen dem elektrischen Hauptsteckverbinder (16) und dem ersten Verbinder (19) mittels wenigstens eines elektrischen Kabels (17) hergestellt ist.

8. Fahrzeugsitz nach einem der Ansprüche 5 bis 7, **dadurch gekennzeichnet, dass** die elektrische Verbindung zwischen dem elektrischen Hauptsteckverbinder (16) und dem ersten Verbindungselement (9) mittels wenigstens eines Kabels (20) hergestellt ist.

9. Fahrzeugsitz nach einem der Ansprüche 1 bis 8, **dadurch gekennzeichnet, dass** das zweite Verbindungselement (10) mit einem zweiten Verbinder (22) in elektrischer Verbindung steht, der mit dem Sitzteil (2) fest verbunden ist und an eine Heizeinlage des Sitzteils (2) anschließbar ist.

10. Fahrzeugsitz nach Anspruch 9, **dadurch gekennzeichnet, dass** die elektrische Verbindung zwischen dem zweiten Verbindungselement (10) und dem zweiten Verbinder (22) mittels wenigstens eines elektrischen Kabels (23) hergestellt ist.

## Claims

1. Vehicle seat (1) comprising a sitting portion (2), a backrest (3) and a device for heating said sitting portion (2) and said backrest (3), said seat (1) being able to pass from a functional position to a stowed position by separating the sitting portion (2) and the backrest (3), **characterized in that** the heating device comprises a first electrical connection element (9) secured to the backrest (3) and a second electrical connection element (10) secured to the sitting portion (2), and **in that** said two elements (9, 10) cooperate with one another when the seat (1) is in the functional position, and can be separated to allow said seat (1) to adopt the stowed position.

2. Vehicle seat according to Claim 1, **characterized in that** the first connection element (9) and the second connection element (10) cooperate by means of a male/female-type interaction.

3. Vehicle seat according to either one of Claims 1 and 2, **characterized in that** the first connection element (9) comprises at least one electrically conductive compartment (14), and **in that** the second connection element (10) comprises at least one projecting, electrically conductive pin (21) intended to be accommodated in said compartment (14), being in contact therewith.

4. Vehicle seat according to Claims 3, **characterized in that** each compartment (14) comprises an elastically deformable, electrically conductive blade (15), and **in that** each pin (21) penetrates into a compartment (14), deforming said blade (15) by contact.

5. Vehicle seat according to any one of Claims 1 to 4, **characterized in that** it comprises a main electrical connector (16) that is secured to the backrest (3) and can be connected to an electrical circuit of the vehicle, and **in that** said main connector (16) is electrically connected to the first connection element (9).

6. Vehicle seat according to Claim 5, **characterized in that** the main electrical connector (16) is electrically connected to a first connector (19) secured to the backrest (3) and able to be connected to a heating layer of said backrest (3).

7. Vehicle seat according to Claim 6, **characterized in that** the electrical connection between the main electrical connector (16) and the first connector (19) is established by means of at least one electrical wire (17).

8. Vehicle seat according to any one of Claims 5 to 7, **characterized in that** the electrical connection between the main electrical connector (16) and the first connection element (9) is established by means of at least one wire (20).

9. Vehicle seat according to any one of Claims 1 to 8, **characterized in that** the second connection element (10) is electrically connected to a second connector (22) secured to the sitting portion (2) and can be connected to a heating layer of said sitting portion (2) .

10. Vehicle seat according to Claim 9, **characterized in that** the electrical connection between the second connection element (10) and the second connector (22) is established by means of at least one electrical wire (23).
